# EUROPEAN PATENT SPECIFICATION

(11) **EP 2 695 910 B1**
(45) Date of publication and mention of the grant of the patent: **24.05.2017**
(21) Application number: 13003210.5
(22) Date of filing: 24.06.2013
(51) Int. Cl.: C09J 183/04, C08J 3/22, C08J 3/24, C08K 3/16, C08K 5/544

(54) **Color-changeable organopolysiloxane composition and structural material adhered by the composition**
Farbwechselbare Organopolysiloxanzusammensetzung und Strukturmaterial, an dem die Zusammensetzung haftet
Composition d'organopolysiloxane à changement de couleur et matériau structural collé par la composition

(30) Priority: 10.07.2012 JP 2012155038
(43) Date of publication of application: 12.02.2014
(73) Proprietor: Shin-Etsu Chemical Co., Ltd., Chiyoda-ku Tokyo 100 (JP)
(72) Inventor: Araki, Tadashi, Annakashi, Gunma-ken (JP); Sakamoto, Takafumi, Annakashi, Gunma-ken (JP)
(74) Representative: Wibbelmann, Jobst

(56) References cited:
- EP-A2- 1 762 603
- DATABASE WPI Week 200579 Thomson Scientific, London, GB; AN 2005-773972 XP002717896, -& JP 2005 306994 A (SHINETSU CHEM IND CO LTD) 4 November 2005 (2005-11-04)
- DATABASE WPI Week 200854 Thomson Scientific, London, GB; AN 2008-J33340 XP002717897, -& JP 2008 157298 A (TOYOTA JIDOSHA KK) 10 July 2008 (2008-07-10)

## Description

### BACKGROUND OF THE INVENTION

### Field of the Invention

The present invention relates to a novel color-changeable organopolysiloxane composition a curing degree of which can be visually recognized by color change due to moisture, and a structural material using the composition.

### Description of the Related Art

As a composition which reacts with a moisture in the air and cures by cross-linking, an organopolysiloxane composition curable at room temperature has heretofore been known. The organopolysiloxane composition curable at room temperature is excellent in safety, and durability or adhesiveness as a rubber, so that it has widely been used in the fields of architecture, transportation equipment, and electric and electronic parts. These moisture-curable type organopolysiloxane compositions curable at room temperature are of the curing type in which cross-linking gradually proceeds by moisture in the air, so that a certain period of time is required from coating to a portion to be used to the completion of curing. Accordingly, for judging whether the coated material is cured or not, there is no other means than touching with a finger to the coated material, or waiting for a certain period of time and then confirming the state of the coated material to be a rubber.

However, when the curing degree is to be confirmed by touching with a finger, if a stain is attached to the fingers, there is a possibility that the cured product is contaminated. Also, when a certain period of time is to be awaited for curing, there are problems that the working time becomes a long whereby productivity is lowered, and a place for storing the coated materials is necessary. Moreover, when the curable composition is used as an adhesive, if the adherend is moved before the adhesive is cured, inherent adhesiveness cannot be obtained whereby the curing degree cannot be confirmed.

In addition, in the moisture-curable type organopolysiloxane composition curable at room temperature, a degree of curing thereof is affected by an amount of the composition to be used, a time to be used the same (summer season, winter season, rainy season, etc.), and a shape of the member to be applied. Thus, it is an extremely difficult problem to accurately judge whether the moisture-curable type organopolysiloxane composition curable at room temperature is cured or not. When the moisture-curable type organopolysiloxane composition curable at room temperature is to be used, it is a significant problem to establish a method for confirming a degree of curing simply and easily.

To overcome the problems, in recent years, in Patent Document 1, it has been used a means in which a degree of curing can be confirmed with eyes by using an organoxy titanium catalyst and an organic compound having at least one hydroxyl group bonded to the benzene ring in the molecule, whereby the substance formed by reacting the titanium catalyst and the hydroxyl group forms a color, and the color of the composition is disappeared or changed by hydrolysis of the colored substance due to the moisture in the air. The technique in the publication is effective for a de-alcohol type organopolysiloxane composition curable at room temperature, but it cannot be applied to the conventionally used de-oxime type organopolysiloxane composition curable at room temperature or de-acetone type organopolysiloxane composition curable at room temperature, so that an applicable filed thereof is limited.

Also, in Patent Document 2, it has been proposed that curing a composition can be judged by adding cobalt chloride to a liquid state gasket so that the color of an organopolysiloxane composition curable at room temperature changes from blue to red by moisture accompanied by the progress of curing. However, even when cobalt chloride alone is added to the composition, it is extremely difficult to visually recognize the change from blue to red, and even when the color has changed, it takes a long time to cause the change whereby the method cannot be practically used.

Incidentally, in Patent Document 3 and Patent Document 4, a method for synthesizing an organopolysiloxane composition has been proposed by adding cobalt chloride as a condensation catalyst of a condensed type silicone elastomer. However, addition of the cobalt chloride in these documents does not intend to provide color changeability to the composition.

### prior art references

### Patent Documents

Patent Document 1: Japanese Patent Laid-Open Publication No. 2006-213780
Patent Document 2: Japanese Patent Laid-Open Publication No. 2008-157298
Patent Document 3: Japanese Patent Laid-Open Publication No. 2007-100063
Patent Document 4: Japanese Patent Laid-Open Publication No. 2005-306994

### SUMMARY OF THE INVENTION

The present invention has been made in view of the circumstances, and an object thereof is to provide a color-changeable organopolysiloxane composition which can visually recognize a degree of curing of the composition by remarkable change in the color tone when it is cured.

To solve the problems, in the present invention, it is provided a color-changeable organopolysiloxane composition which comprises,
(A) 100 parts by mass of an organopolysiloxane composition curable at room temperature,
(B) 0.01 to 10 parts by mass of cobalt chloride, and
(C) 0.001 to 10 parts by mass of a silane coupling agent represented by the following formula (1),

   (R¹O)₃₋ₙRₙSiQ¹NHQ²NH₂ ... (1)

   wherein R and R¹ may be the same or different from each other, and each represent an unsubstituted or substituted monovalent hydrocarbon group having 1 to 10 carbon atoms; Q¹ and Q² may be the same or different from each other and each represent an unsubstituted or substituted divalent hydrocarbon group having 1 to 10 carbon atoms; and "n" represents an integer of 0 to 2.

When such a color-changeable organopolysiloxane composition of the present invention is employed, a function of clearly changing a color tone can be provided to an organopolysiloxane composition curable at room temperature at the time of curing.

Also, the color-changeable organopolysiloxane composition becomes a material in which the degree of curing can be visually recognized by changing the color at the time of curing.

When such a color-changeable organopolysiloxane composition is employed, it can be expected that contamination of the cured product due to touching with a finger for confirmation of curing is reduced and working efficiency is improved.

Also, the color-changeable organopolysiloxane composition is preferably a material in which Component (B) in the form of a masterbatch is added to Component (A) and Component (C).

When Component (B) in the form of a masterbatch is employed as mentioned above, it heightens dispersibility with Component (A), and change in color tone of cobalt chloride due to moisture in the air before addition thereof can be suppressed.

Further, in the present invention, a structural material which is adhered by the color-changeable organopolysiloxane composition can be provided.

Thus, the color-changeable organopolysiloxane composition of the present invention can be suitably used as an adhesive for various kinds of members to be used for transportation equipment such as automobiles, an adhesive for electric and electronic parts, and an adhesive for fiber products, glass products, metal products, plastic products and so on.

As explained above, according to the color-changeable organopolysiloxane composition of the present invention, the curing degree of the composition can be easily confirmed by visual observation. Also, as compared with the conventional organopolysiloxane curable at room temperature, workability or rubber physical property is not changed so that it can be used similarly as in the conventional products. The present invention can be suitably used in the fields of architecture, transportation equipment, and electric and electronics, and is therefore particularly useful in the fields in which curing or not is to be confirmed within a relatively short period of time (transportation equipment, electric and electronic parts and so on).

### DETAILED DESCRIPTION OF THE PREFERRED EMBODIMENTS

In the following, the present invention is explained in more detail.

As mentioned above, when a moisture-curable type organopolysiloxane composition curable at room temperature is used, it has been desired to obtain a color-changeable organopolysiloxane composition in which a curing degree can be easily and simply confirmed.

Thus, the present inventors have intensively studied to solve the problems, and as a result, they have found that the above object can be accomplished by using cobalt chloride and a silane coupling agent represented by the following formula (1) in combination, so that the silane coupling agent is coordinated to the cobalt chloride, which makes color change by moisture remarkable,

(R¹O)₃₋ₙRₙSiQ¹NHQ²NH₂ ... (1)

wherein R and R¹ may be the same or different from each other, and each represent an unsubstituted or substituted monovalent hydrocarbon group having 1 to 10 carbon atoms; Q¹ and Q² may be the same or different from each other and each represent an unsubstituted or substituted divalent hydrocarbon group having 1 to 10 carbon atoms; and "n" represents an integer of 0 to 2.

Accordingly, a color-changeable organopolysiloxane composition of the present invention comprises
(A) 100 parts by mass of an organopolysiloxane composition curable at room temperature,
(B) 0.01 to 10 parts by mass of cobalt chloride, and
(C) 0.001 to 10 parts by mass of a silane coupling agent represented by the following formula (1),

   (R¹O)₃₋ₙRₙSiQ¹NHQ²NH₂ ... (1)

   wherein R and R¹ may be the same or different from each other, and each represent an unsubstituted or substituted monovalent hydrocarbon group having 1 to 10 carbon atoms; Q¹ and Q² may be the same or different from each other and each represent an unsubstituted or substituted divalent hydrocarbon group having 1 to 10 carbon atoms; and "n" represents an integer of 0 to 2.

In the following, the present invention is explained in more detail.

### Component (A)

Component (A) is a organopolysiloxane composition curable at room temperature which cures by moisture in the air, and the curing mechanism thereof is not specifically limited by a de-alcohol type, de-acetone type or de-oxime type, and is conventionally known materials, particularly any of commercially available products can be used. There may be mentioned, for example, a composition comprising a hydroxyl group-terminal sealed organopolysiloxane, an alkoxysilane as a cross-linking agent, an organic titanium compound as a condensation catalyst, and, if necessary, a filler and other additive(s). A color tone of the organopolysiloxane composition curable at room temperature to be used is not particularly limited, and for example, it is desirably a material having no color tone such as transparent or semi-transparent, or a color which can confirm the curing by moisture including bright colors such as a white color, and among these, a white color is particularly desired.

Incidentally, a silicone (organopolysiloxane) cures within a short period of time without requiring any specific operations such as heating and pressurizing, and can maintain rubber elasticity with a wide temperature range as compared with the other room temperature-curable resins.

### Component (B)

The cobalt chloride as Component (B) is an indispensable component as a curing indicator component for judging the curing by changing a color tone to blue, gray, reddish violet or red. The cobalt chloride to be used may be either an anhydride (blue color) or a hydrate (red color or reddish violet color), and when the hydrate is used, it takes some time to cause change in color tone. Thus, anhydrous cobalt chloride is preferably used for making change in color tone good from the initial stage of the addition. When an amount of the cobalt chloride to be added is a little, it may be added by dissolving in the silane coupling agent of Component (C).

Also, the cobalt chloride may also exist as a powder state, which is easily aggregated and in a bulky state in many cases. Therefore, for the purpose of heightening dispersibility with the organopolysiloxane composition curable at room temperature of Component (A), and for the purpose of suppressing change in color tone of the cobalt chloride by moisture in the air before addition, it is desirably added to the organopolysiloxane composition curable at room temperature of Component (A) in the form of a masterbatch in which it is uniformly dispersed in a liquid state component provisionally.

The liquid state component is not particularly limited so long as it is generally easily available and has good dispersibility of cobalt chloride such as alkylpolysiloxanes and polyalkylene glycols which are liquid state at 25°C. In the viewpoints of compatibility with Component (A) and dispersion stability, alkylpolysiloxanes are preferred and dimethylpolysiloxanes are particularly preferred. The alkylpolysiloxanes herein used may be either non-reactive or reactive, and in consideration with stability with a lapse of time of the resulting masterbatch, non-reactive alkylpolysiloxane is preferably used.

Preparation of the masterbatch can be carried out by mixing 10 to 1,000 parts by mass of the liquid state component, preferably 50 to 300 parts by mass thereof with 100 parts by mass of the cobalt chloride as Component (B), and uniformly dispersing the same.

A viscosity of the liquid state component to be used for the preparation of the masterbatch is preferably in the range of 10 to 100,000 mm²/s at 23°C, more preferably in the range of 300 to 10,000 mm²/s at 23°C.

For the preparation of the masterbatch, a device which has generally been used for mixing a liquid and a solid can be used, and there may be mentioned, for example, a three-roll mill and a universal stirrer. In particular, a three-roll mill is preferably used for the preparation thereof since a bulky state cobalt chloride can be effectively pulverized and more uniform masterbatch can be prepared.

Component (B) is used in the range of 0.01 to 10 parts by mass, preferably in the range of 0.05 to 7 parts by mass based on 100 parts by mass of Component (A). If it is less than 0.01 part by mass, change in color tone due to progress of the curing cannot sufficiently be obtained so that judgment of the curing or not becomes difficult. Also, if it exceeds 10 parts by mass, an amount of the component which changes color tone is too much whereby change in color tone becomes dull, and further mechanical characteristics of the obtained rubber are lowered. In addition, an amount to be added is too much so that it is disadvantageous in cost.

### Component (C)

An amino group of the silane coupling agent represented by the following formula (1) as Component (C) is coordinated to cobalt chloride of Component (B) whereby the color tone is changed, for example, from blue to grey, and due to the moisture, the water molecule is exchanged to Component (C) and coordinated to cobalt chloride to enlarge the color change. Component (C) is an essential component for the present invention to enlarge change in color tone,

(R¹O)₃₋ₙRₙSiQ¹NHQ²NH₂ ... (1)

wherein R and R¹ may be the same or different from each other, and each represent an unsubstituted or substituted monovalent hydrocarbon group having 1 to 10 carbon atoms; Q¹ and Q² may be the same or different from each other and each represent an unsubstituted or substituted divalent hydrocarbon group having 1 to 10 carbon atoms; and "n" represents an integer of 0 to 2.

Component (C) acts not only enlarging change in color in the color-changeable organopolysiloxane composition of the present invention, but also as an adhesive component. Accordingly, even when the organopolysiloxane composition curable at room temperature of Component (A) to be used is not necessarily well adhered to an adherend, an effect can be expected that adhesiveness becomes good by the silane coupling agent of Component (C).

In the formula (1), R and R¹ are each substituted or unsubstituted monovalent hydrocarbon group having 1 to 10 carbon atoms, particularly 1 to 6 carbon atoms, and may be mentioned, for example, an alkyl group such as a methyl group, an ethyl group and a propyl group; a cycloalkyl group such as a cyclohexyl group; and a group in which a hydrogen bonding in these groups is partially substituted by a halogen atom, for example, a 3,3,3-trifluoropropyl group; and a plural number of Rs and R¹s in the formula (1) may be the same groups or different kinds of groups.

In the formula (1), Q¹ and Q² are each substituted or unsubstituted divalent hydrocarbon group having 1 to 10 carbon atoms, particularly 2 to 8 carbon atoms, particularly preferably an alkylene group such as a methylene group, an ethylene group, a propylene group, a butylene group and an octylene group, and a plural number of Q¹s and Q²s in the formula (1) may be the same groups or different kinds of groups.

Specific examples of the silane coupling agent of Component (C) may be exemplified by N-2-(aminoethyl)-3-aminopropyltrimethoxysilane, N-2-(aminoethyl)-3-amino-butyltrimethoxysilane, N-2-(aminoethyl)-3-aminooctyltrimethoxysilane, N-2-(aminoethyl)-3-aminopropyltrimethoxysilane, N-4-(aminobutyl)-3-aminopropyltrimethoxysilane, N-3-(aminopropyl)-3-aminopropyltrimethoxysilane, N-8-(aminooctyl)-3-aminopropyltrimethoxysilane, N-2-(aminoethyl)-3-aminopropyltriethoxysilane, N-2-(aminoethyl)-3-aminooctyltriethoxysilane, N-8-(aminooctyl)-3-aminopropyltriethoxysilane, N-2-(aminoethyl)-3-aminopropylmethyldimethoxysilane, N-2-(aminoethyl)-3-aminopropylmethyldiethoxysilane, N-2-(aminoethyl)-3-aminopropyldimethylmethoxysilane and N-2-(aminoethyl)-3-aminopropyldimethylethoxysilane, and among these, N-2-(aminomethyl)-3-aminopropyltrimethoxysilane, N-2-(aminoethyl)-3-aminopropyltriethoxysilane and N-2-(aminoethyl)-3-aminopropylmethyldimethoxysilane are preferably used.

Component (C) is used in the range of 0.001 to 10 parts by mass, preferably in the range of 0.01 to 5 parts by mass based on 100 parts by mass of Component (A). If it is less than 0.001 part by mass, it is not sufficient to sufficiently change the coordinated state of cobalt chloride, and as a result, sufficient change in color tone by the progress of curing cannot be obtained, whereby it is not preferred since judgment of curing or not is difficult. Also, if it exceeds 10 parts by mass, an amount of Component (C) to be coordinated to cobalt chloride of Component (B) is too much, so that it is not preferred since change in color tone becomes dull, and mechanical characteristics of the resulting rubber is also lowered. Moreover, an amount to be added is too much so that it is disadvantageous in cost.

The color-changeable organopolysiloxane composition of the present invention can be suitably used for the uses as an adhesive for various kinds of members to be used for transportation equipment such as automobiles, a sealing agent, an adhesive or a moisture proof coating agent for electric and electronic parts, a coating agent or an adhesive for fiber products, glass products, metal products and plastic products, and a sealing material for buildings, whereby a useful structural material can be provided.

### EXAMPLES

In the following, the present invention will be explained in more detail by referring to Synthetic Examples, Examples and Comparative Examples, but the present invention is not limited by the following Examples.

### [Preparation Example 1 of masterbatch]

To 100 parts by mass of anhydrous cobalt chloride was added 100 parts by mass of a polydimethylsiloxane (Trade name; KF-96-1000cS, product of Shin-Etsu Chemical Co., Ltd.) sealed by the trimethylsilyl groups at the terminals, and the mixture was uniformly dispersed by a three-roll mill to obtain Masterbatch 1.

### [Preparation Example 2 of masterbatch]

To 100 parts by mass of cobalt chloride hydrate was added 100 parts by mass of a polydimethylsiloxane (Trade name; KF-96-1000cS, product of Shin-Etsu Chemical Co., Ltd.) sealed by the trimethylsilyl groups at the terminals, and the mixture was uniformly dispersed by a three-roll mill to obtain Masterbatch 2.

### [Example 1]

As an organopolysiloxane composition curable at room temperature, to 100 parts by mass of KE-45-W (curing type; de-oxime type, product of Shin-Etsu Chemical Co., Ltd.) was added 0.5 part by mass of N-2-(aminoethyl)-3-aminopropyltrimethoxysilane (Trade name; KBM-603, product of Shin-Etsu Chemical Co., Ltd.), the mixture was uniformly dispersed under sealed conditions, then, 2 parts by mass of the Masterbatch 1 was added to the mixture, and the resulting mixture was uniformly dispersed under sealed conditions to obtain Composition 1.

### [Example 2]

As an organopolysiloxane composition curable at room temperature, to 100 parts by mass of KE-4898-W (curing type; de-alcohol type, product of Shin-Etsu Chemical Co., Ltd.) was added 0.5 part by mass of N-2-(aminoethyl)-3-aminopropyltrimethoxysilane (Trade name; KBM-603, product of Shin-Etsu Chemical Co., Ltd.), the mixture was uniformly dispersed under sealed conditions, then, 2 parts by mass of the Masterbatch 1 was added to the mixture, and the resulting mixture was uniformly dispersed under sealed conditions to obtain Composition 2.

### [Example 3]

As an organopolysiloxane composition curable at room temperature, to 100 parts by mass of KE-348-W (curing type; de-acetone type, product of Shin-Etsu Chemical Co., Ltd.) was added 0.5 part by mass of N-2-(aminoethyl)-3-aminopropyltrimethoxysilane (Trade name; KBM-603, product of Shin-Etsu Chemical Co., Ltd.), the mixture was uniformly dispersed under sealed conditions, then, 2 parts by mass of the Masterbatch 1 was added to the mixture, and the resulting mixture was uniformly dispersed under sealed conditions to obtain Composition 3.

### [Example 4]

As an organopolysiloxane composition curable at room temperature, to 100 parts by mass of KE-45-W (curing type; de-oxime type, product of Shin-Etsu Chemical Co., Ltd.) was added 0.5 part by mass of N-2-(aminoethyl)-3-aminopropyltriethoxysilane (Trade name; KBE-603, product of Shin-Etsu Chemical Co., Ltd.), the mixture was uniformly dispersed under sealed conditions, then, 2 parts by mass of the Masterbatch 1 was added to the mixture, and the resulting mixture was uniformly dispersed under sealed conditions to obtain Composition 4.

### [Example 5]

As an organopolysiloxane composition curable at room temperature, to 100 parts by mass of KE-45-W (curing type; de-oxime type, product of Shin-Etsu Chemical Co., Ltd.) was added 0.5 part by mass of N-2-(aminoethyl)-3-aminopropylmethyldimethoxysilane (Trade name; KBM-602, product of Shin-Etsu Chemical Co., Ltd.), the mixture was uniformly dispersed under sealed conditions, then, 2 parts by mass of the Masterbatch 1 was added to the mixture, and the resulting mixture was uniformly dispersed under sealed conditions to obtain Composition 5.

### [Example 6]

As an organopolysiloxane composition curable at room temperature, to 100 parts by mass of KE-45-W (curing type; de-oxime type, product of Shin-Etsu Chemical Co., Ltd.) was added 0.5 part by mass of N-2-(aminoethyl)-3-aminopropyltrimethoxysilane (Trade name; KBM-603, product of Shin-Etsu Chemical Co., Ltd.), the mixture was uniformly dispersed under sealed conditions, then, 2 parts by mass of the Masterbatch 2 was added to the mixture, and the resulting mixture was uniformly dispersed under sealed conditions to obtain Composition 6.

### [Example 7]

As an organopolysiloxane composition curable at room temperature, to 100 parts by mass of KE-45-W (curing type; de-oxime type, product of Shin-Etsu Chemical Co., Ltd.) was added 0.5 part by mass of N-2-(aminoethyl)-3-aminopropyltrimethoxysilane (Trade name; KBM-603, product of Shin-Etsu Chemical Co., Ltd.), the mixture was uniformly dispersed under sealed conditions, then, 5 parts by mass of the Masterbatch 1 was added to the mixture, and the resulting mixture was uniformly dispersed under sealed conditions to obtain Composition 7.

### [Example 8]

As an organopolysiloxane composition curable at room temperature, to 100 parts by mass of KE-45-W (curing type; de-oxime type, product of Shin-Etsu Chemical Co., Ltd.) was added 5 parts by mass of N-2-(aminoethyl)-3-aminopropyltrimethoxysilane (Trade name; KBM-603, product of Shin-Etsu Chemical Co., Ltd.), the mixture was uniformly dispersed under sealed conditions, then, 2 parts by mass of the Masterbatch 1 was added to the mixture, and the resulting mixture was uniformly dispersed under sealed conditions to obtain Composition 8.

### [Example 9]

As an organopolysiloxane composition curable at room temperature, to 100 parts by mass of KE-45-W (curing type; de-oxime type, product of Shin-Etsu Chemical Co., Ltd.) was added 0.5 part by mass of N-2-(aminoethyl)-8-aminooctyltrimethoxysilane, the mixture was uniformly dispersed under sealed conditions, then, 2 parts by mass of the Masterbatch 1 was added to the mixture, and the resulting mixture was uniformly dispersed under sealed conditions to obtain Composition 9.

### [Example 10]

As an organopolysiloxane composition curable at room temperature, to 100 parts by mass of KE-45-W (curing type; de-oxime type, product of Shin-Etsu Chemical Co., Ltd.) was added 0.5 part by mass of N-8-(aminooctyl)-3-aminopropyltrimethoxysilane, the mixture was uniformly dispersed under sealed conditions, then, 2 parts by mass of the Masterbatch 1 was added to the mixture, and the resulting mixture was uniformly dispersed under sealed conditions to obtain Composition 10.

### [Comparative Example 1]

In the same manner as in Example 1 except for not adding N-2-(aminoethyl)-3-aminopropyltrimethoxysilane in Example 1, Composition 11 was obtained.

### [Comparative Example 2]

In the same manner as in Example 1 except for not adding Masterbatch 1 in Example 1, Composition 12 was obtained.

### [Comparative Example 3]

As an organopolysiloxane composition curable at room temperature, to 100 parts by mass of KE-45-W (curing type; de-oxime type, product of Shin-Etsu Chemical Co., Ltd.) was added 0.5 part by mass of N-2-(aminoethyl)-3-aminopropyltrimethoxysilane (Trade name; KBM-603, product of Shin-Etsu Chemical Co., Ltd.), the mixture was uniformly dispersed under sealed conditions, then, 30 parts by mass of the Masterbatch 1 was added to the mixture, and the resulting mixture was uniformly dispersed under sealed conditions to obtain Composition 13.

### [Comparative Example 4]

As an organopolysiloxane composition curable at room temperature, to 100 parts by mass of KE-45-W (curing type; de-oxime type, product of Shin-Etsu Chemical Co., Ltd.) was added 15 parts by mass of N-2-(aminoethyl)-3-aminopropyltrimethoxysilane (Trade name; KBM-603, product of Shin-Etsu Chemical Co., Ltd.), the mixture was uniformly dispersed under sealed conditions, then, 2 parts by mass of the Masterbatch 1 was added to the mixture, and the resulting mixture was uniformly dispersed under sealed conditions to obtain Composition 14.

### [Comparative Example 5]

As an organopolysiloxane composition curable at room temperature, to 100 parts by mass of POS Seal LM (modified silicone type, white color, product of CEMEDINE Co., Ltd.) was added 15 parts by mass of N-2-(aminoethyl)-3-aminopropyltrimethoxysilane (Trade name; KBM-603, product of Shin-Etsu Chemical Co., Ltd.), the mixture was uniformly dispersed under sealed conditions, then, 2 parts by mass of the Masterbatch 1 was added to the mixture, and the resulting mixture was uniformly dispersed under sealed conditions to obtain Composition 15.

These compositions in Examples and Comparative Examples were each formed to a sheet state with a thickness of 2 mm. With regard to the color of the composition, at the time of forming to a sheet with a thickness of 2 mm, it is cured in the atmosphere at 23±2°C and 50±5%RH for one hour, then, cured for 7 days and the product was evaluated with eyes and change in color was confirmed. Those in which the color was changed after 1 hour from the preparation of the sheet and the composition was cured by touching with a finger were judged that they were stood the test. In addition, at that time, a curing state was confirmed by touching with a finger on the surface of the sheet. The above compositions and the compositions before adding cobalt chloride and the coupling agent were cured in the atmosphere at 23±2°C and 50±5%RH for 7 days, and their rubber physical properties (hardness, elongation and tensile strength) were measured in accordance with JIS-K6249 and compared to each other. Formulations of Examples are shown in Table 1 and those of Comparative Examples in Table 3, and the results of Examples are shown in Table 2 and those of Comparative Examples in Table 4.

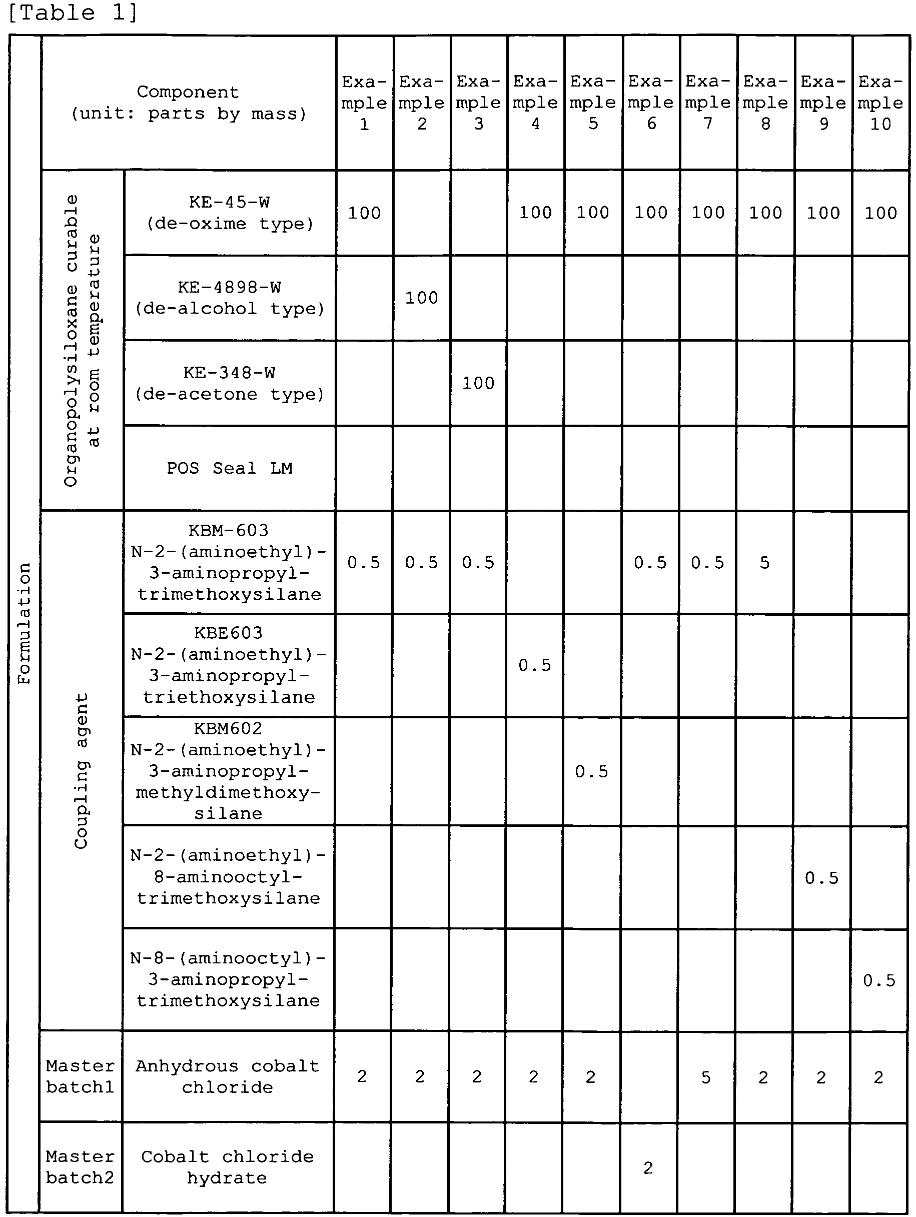

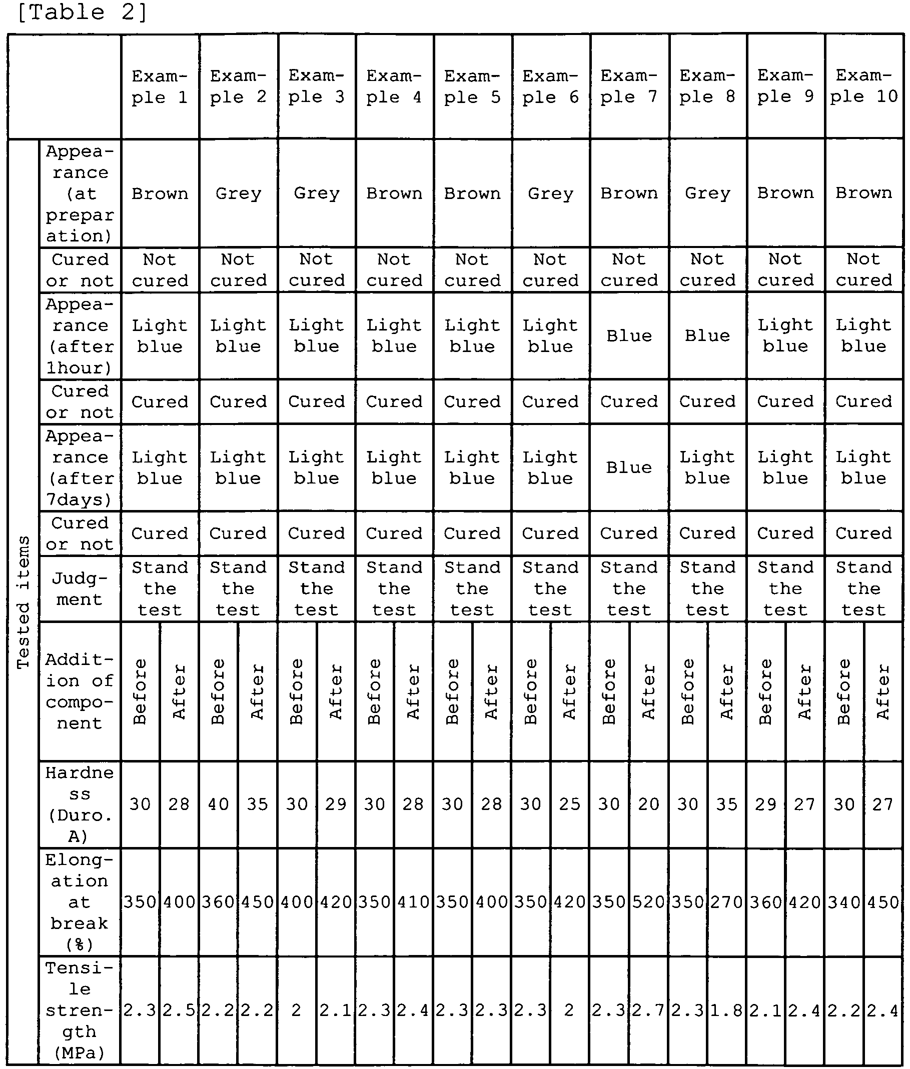

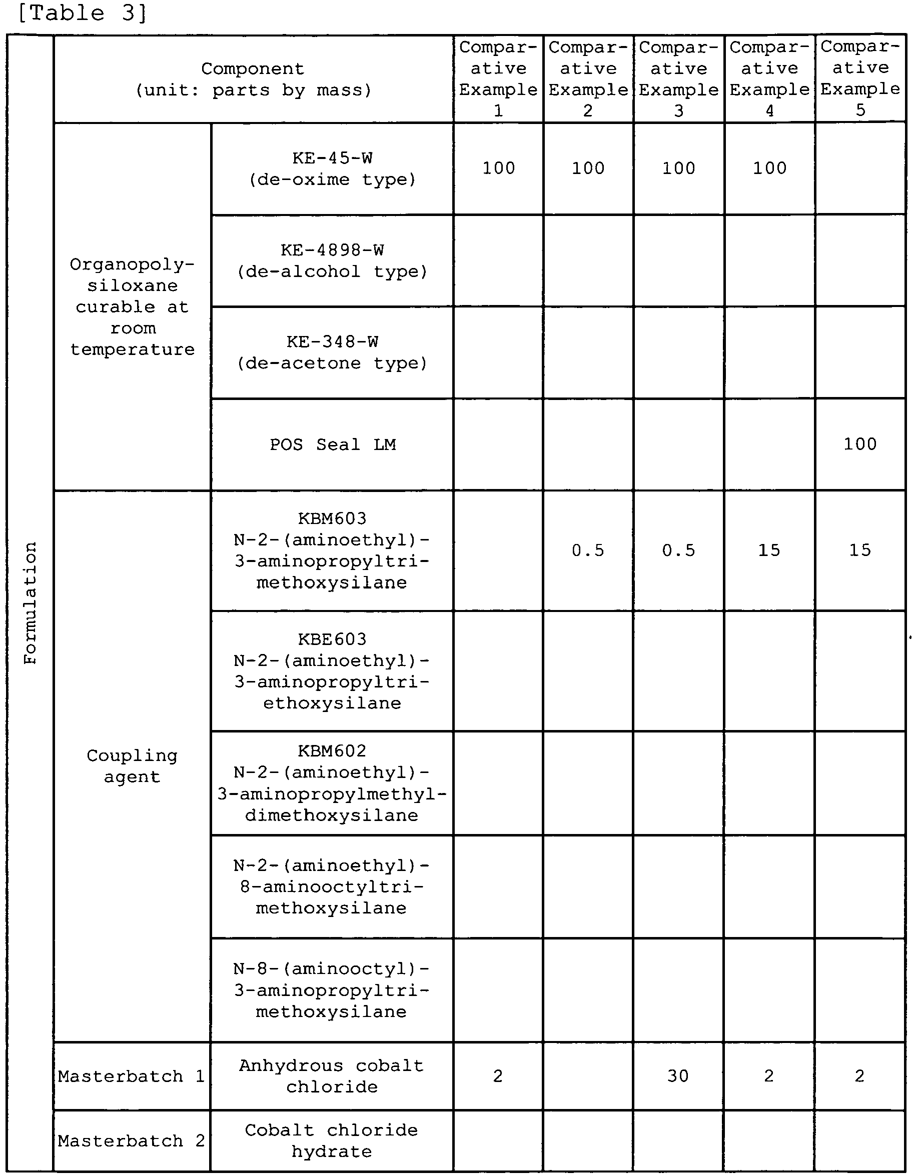

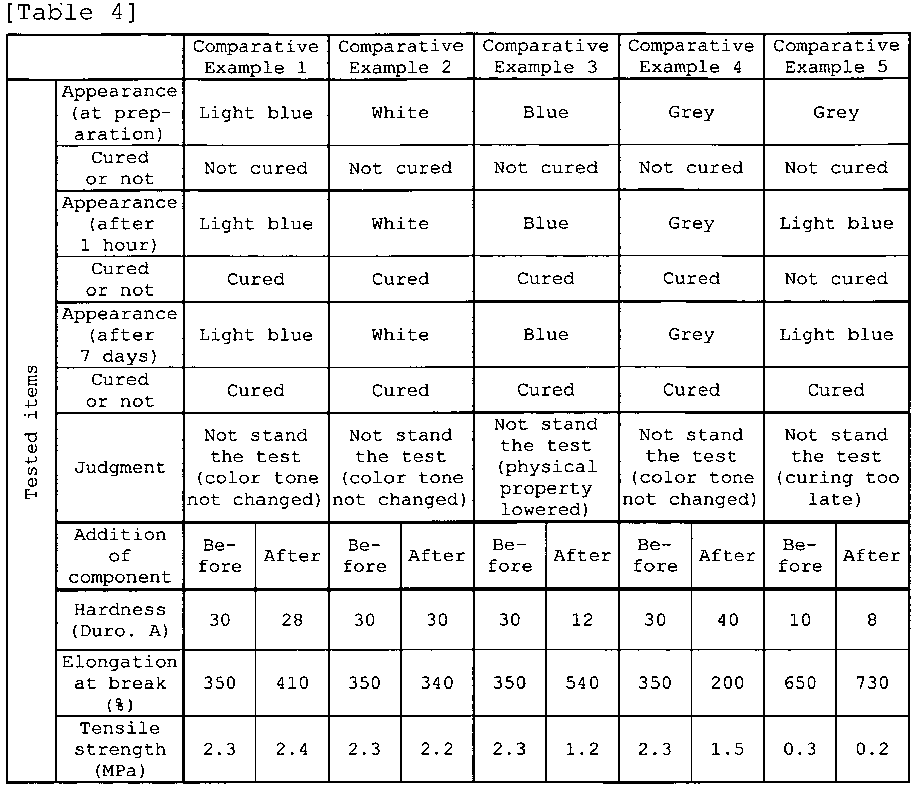

As shown in Table 2, in Examples 1 to 10, color tones were changed accompanied with curing, and no deterioration in physical properties was observed even after addition of the components. In addition, in Comparative Examples 1, 2 and 4 of Table 4, color change accompanied with curing could not be observed, and in Comparative Example 3, an amount of Component (B) was too much so that change in color tone became dull, and deterioration in physical properties was observed after addition of cobalt chloride or the coupling agent component. Also, in Comparative Example 5, curing became slow, and no change in color tone accompanied with curing was observed. From the results, it could be verified that a degree of curing of the color-changeable organopolysiloxane composition of the present invention could be visually confirmed.

It must be stated here that the present invention is not restricted to the embodiments shown by the embodiments. The above-mentioned embodiments are merely examples so that any embodiments composed of substantially the same technical concept as disclosed in the claims of the present invention and expressing a similar effect are included in the technical scope of the present invention.

## Claims

1. A color-changeable organopolysiloxane composition which comprises
(A) 100 parts by mass of an organopolysiloxane composition curable at room temperature,
(B) 0.01 to 10 parts by mass of cobalt chloride, and
(C) 0.001 to 10 parts by mass of a silane coupling agent represented by the following formula (1),
(R¹O)₃₋ₙRₙSiQ¹NHQ²NH₂ ... (1)
wherein R and R¹ may be the same or different from each other, and each represent an unsubstituted or substituted monovalent hydrocarbon group having 1 to 10 carbon atoms; Q¹ and Q² may be the same or different from each other and each represent an unsubstituted or substituted divalent hydrocarbon group having 1 to 10 carbon atoms; and "n" represents an integer of 0 to 2.

2. The color-changeable organopolysiloxane composition according to claim 1, wherein a curing degree of the color-changeable organopolysiloxane composition can be visually recognized by color change at a time of curing.

3. The color-changeable organopolysiloxane composition according to claim 1 or 2, wherein Component (B) in the form of a masterbatch is added to Component (A) and Component (C).

4. A structural material adhered by the color-changeable organopolysiloxane composition according to claim 1 or 2.

## Patentansprüche

1. Farbwechselbare Organopolysiloxan-Zusammensetzung, die umfasst
(A) 100 Gew.-Teile einer Organopolysiloxan-Zusammensetzung, die bei Raumtemperatur härtbar ist,
(B) 0,01 bis 10 Gew.-Teile Kobaltchlorid, und
(C) 0,001 bis 10 Gew.-Teile eines Silan-Kopplungsmittels, wiedergegeben durch die folgende Formel (1),
(R¹O)₃₋ₙRₙSiQ¹NHQ²NH₂ ... (1)
worin R und R¹ gleich oder verschieden voneinander sein können, und jedes steht für eine unsubstituierte oder substituierte monovalente Kohlenwasserstoffgruppe mit 1 bis 10 Kohlenstoffatomen; Q¹ und Q² können gleich oder verschieden voneinander sein und jedes steht für eine unsubstituierte oder substituierte divalente Kohlenwasserstoffgruppe mit 1 bis 10 Kohlenstoffatomen; und "n" steht für eine Ganzzahl von 0 bis 2.

2. Farbwechselbare Organopolysiloxan-Zusammensetzung nach Anspruch 1, worin das Härteausmaß der farbwechselbaren Organopolysiloxan-Zusammensetzung visuell durch eine Farbveränderung zum Zeitpunkt der Härtung festgestellt werden kann.

3. Farbwechselbare Organopolysiloxan-Zusammensetzung nach Anspruch 1 oder 2, worin die Komponente (B) in Form eines Masterbatch der Komponente (A) und Komponente (C) zugegeben wird.

4. Strukturmaterial, zusammengehalten durch die farbwechselbare Organopolysiloxan-Zusammensetzung gemäß Anspruch 1 oder 2.

## Revendications

1. Composition d'organopolysiloxane pouvant changer de couleur qui comprend
(A) 100 parties en masse d'une composition d'organopolysiloxane durcissable à température ambiante,
(B) 0,01 à 10 parties en masse de chlorure de cobalt, et
(C) 0,001 à 10 parties en masse d'un agent de couplage silane représenté par la formule (1) suivante,
(R¹O)₃₋ₙRₙSiQ¹NHQ²NH₂ ... (1)
dans laquelle R et R¹ peuvent être identiques ou différents l'un de l'autre, et chacun représente un groupe hydrocarboné monovalent non substitué ou substitué ayant 1 à 10 atomes de carbone ; Q¹ et Q² peuvent être identiques ou différents l'un de l'autre et représentent chacun un groupe hydrocarboné divalent non substitué ou substitué ayant 1 à 10 atomes de carbone ; et « n » représente un nombre entier de 0 à 2.

2. Composition d'organopolysiloxane pouvant changer de couleur selon la revendication 1, dans laquelle un degré de durcissement de la composition d'organopolysiloxane pouvant changer de couleur peut être reconnu visuellement par un changement de couleur à un moment de durcissement.

3. Composition d'organopolysiloxane pouvant changer de couleur selon la revendication 1 ou 2, dans laquelle le constituant (B) sous la forme d'un mélange maître est ajoutée au constituant (A) et au constituant (C).

4. Matériau de structure adhéré par la composition d'organopolysiloxane pouvant changer de couleur selon la revendication 1 ou 2.
